# EUROPEAN PATENT APPLICATION

(11) **EP 4 682 040 A1**
(43) Date of publication of application: **21.01.2026**
(21) Application number: 23928434.2
(22) Date of filing: 15.12.2023
(51) Int. Cl.: B63B 35/44, B63B 43/10, B63B 43/04, B63B 21/50, H02S 10/40

(54) **MARINE FLOATING BODY, AND MARINE FLOATING BODY ARRAY WITH WAVE PROTECTION WALL AND WIND PROTECTION METHOD USING SAME**

(30) Priority: 17.03.2023 CN 202310262978; 17.03.2023 CN 202320529171 U
(71) Applicant: Biohaven Environmental Solutions (Zhejiang) Co., Ltd., Taizhou, Zhejiang 317306 (CN)
(72) Inventor: XU, Yunyou, Taizhou, Zhejiang 317306 (CN); XU, Weiteng, Taizhou, Zhejiang 317306 (CN); HE, Xin, Taizhou, Zhejiang 317306 (CN); GU, Huiya, Taizhou, Zhejiang 317306 (CN); XU, Danping, Taizhou, Zhejiang 317306 (CN); WANG, Mixue, Taizhou, Zhejiang 317306 (CN)
(74) Representative: Vitina, Maruta
(86) International application number: PCT/CN2023/139160
(87) International publication number: WO 2024/193130

(57) **Abstract**

A marine floating body is provided with an air chamber, and is configured to float on a sea surface. A wall structure enclosing the air chamber includes a top wall and a side wall. The top wall is fixedly provided with a photovoltaic assembly. The side wall is provided with an inlet check valve. The marine floating body is configured to submerge under large waves to avoid impact and to resurface automatically when conditions calm. A redundant buoyancy of the marine floating body array is controlled so that, under extreme weather, a wind pressure generated by large waves exceeds the buoyancy, causing the array to submerge, and the array resurfaces when the wind and waves diminish. A marine floating body array with a wave-breaking baffle, and a wind-wave resisting method using the same are also provided.

## Description

### CROSS-REFERENCE TO RELATED APPLICATIONS

This application claims the benefit of priority from Chinese Patent Application No. 202310262978.4, filed on March 17, 2023 and titled "Marine floating body, a marine floating body array with a wave-breaking baffle, and a wind-wave resisting method using the same", and Chinese Patent Application No. 202320529171.8, filed on March 17, 2023 and titled "Marine floating body and a marine floating body array with a wave-breaking baffle". The content of the aforementioned application, including any intervening amendments thereto, is incorporated herein by reference in its entirety.

### TECHNICAL FIELD

This application relates to offshore photovoltaics, and more particularly to a marine floating body, a marine floating body array with a wave-breaking baffle, and a wind-wave resisting method using the same.

### BACKGROUND

In recent years, photovoltaic technology has rapidly developed, and photovoltaic systems have been widely deployed across various fields. At the same time, as environmental issues associated with the petroleum and petrochemical industries have become increasingly prominent, there is a growing demand for clean and sustainable energy.

With the global development of the photovoltaic industry, photovoltaics have attracted increasing attention due to their low cost and environmentally friendly characteristics. One of the major challenges for photovoltaic power generation is the large land area required, and the rising cost of land may limit the further development of the industry. In this context, deploying photovoltaic systems over vast ocean areas for power generation presents a new opportunity for the growth of the photovoltaic sector. Compared with floating photovoltaics already applied on reservoirs, lakes and fish ponds, large-scale offshore photovoltaic deployment must address the practical challenges posed by high winds and rough waves at sea, and ensure that photovoltaic products can withstand severe offshore conditions without being damaged.

The ocean covers a vast area, far exceeding the total land area, providing abundant space for development. Recent studies on offshore photovoltaic systems have been conducted, achieving preliminary results. However, the current systems can only withstand limited levels of wind and waves. While these systems are capable of enduring typical offshore conditions, they remain at risk of being damaged by rare, extreme waves. Based on this, the present disclosure further investigates marine floating bodies and corresponding wind-and-wave resisting methods, aiming to design an offshore photovoltaic floating system capable of overcoming the above challenges and safely withstanding rare, large offshore waves.

### SUMMARY

An object of the present disclosure is to provide a marine floating body, a marine floating body array with a wave-breaking baffle, and a wind-wave resisting method using the same. The marine floating body is provided with a photovoltaic assembly, and is configured to float on a sea surface. Inspired by the survival mechanisms of jellyfish, the marine floating body can submerge into a sea during severe wind and waves to avoid impact, and resurface automatically after the storm subsides to resume photovoltaic power generation. By controlling a redundant buoyant force of the marine floating body array, the wind pressure caused by severe storms is made greater than the redundant buoyancy, thereby enabling the marine floating body array to submerge into the sea for protection under extreme weather conditions and resurface after the wind and waves diminish. Furthermore, an air chamber is provided with an inlet check valve to enhance the stability of the marine floating body and the impact resistance of the photovoltaic assembly, thereby accomplishing the objects of the present disclosure.

Technical solutions of the present disclosure are described as follows.

In a first aspect, this application provides a marine floating body, comprising:
an air chamber;
wherein a wall structure enclosing the air chamber comprises a top wall and a side wall; the top wall is fixedly provided with a photovoltaic assembly; and the side wall is provided with an inlet check valve.

In some embodiments, the number of the inlet check valve is 2-4, and 2-4 inlet check valves are evenly provided at an upper portion of the side wall.

In some embodiments, the number of the 2-4 inlet check valves is two.

In some embodiments, an outer side of a lower portion of the side wall is provided with a floating board; and the floating board is integrally formed with the wall structure;
the marine floating body is configured to offer a redundant buoyancy; and in response to a case that the marine floating body is submerged into a sea, and the air chamber is filled with seawater, a buoyant force acting on the marine floating body is greater than a weight of the marine floating body; and
a horizontal profile of the marine floating body is rectangular, triangular or hexagonal. In some embodiments, the horizontal profile of the marine floating body is square.

In a second aspect, this application provides a marine floating body array with a wave-breaking baffle, comprising:
a plurality of marine floating bodies, each being the marine floating body described above;
wherein transversely adjacent marine floating bodies are connected to each other, and longitudinally adjacent marine floating bodies are connected to each other, such that the marine floating body array is integrally formed.

In some embodiments, the wave-breaking baffle is provided around the marine floating body array.

In some embodiments, the wave-breaking baffle comprises a plurality of hydrofoils connected in sequence;
each of the plurality of hydrofoils has an airfoil-shaped cross section; a first end of a longitudinal section of each of the plurality of hydrofoils has a first curvature, and a second end of the longitudinal section of each of the plurality of hydrofoils has a second curvature, wherein the first curvature is larger than the second curvature;
the first end is configured as a leading end, and the second end is configured as a tailing end;
the leading end is oriented toward an exterior of the marine floating body array, and the tailing end is oriented toward an interior of the marine floating body array; and
a lower surface of each of the plurality of hydrofoils is planar; an upper surface of each of the plurality of hydrofoils is streamlined; and for each of the plurality of hydrofoils, the lower surface is connected to the upper surface.

In some embodiments, a middle portion of each of the first end and the second end of each of the plurality of hydrofoils is provided with a first connecting ring; and the first connecting ring is circular in shape;
two adjacent hydrofoils of the plurality of hydrofoils are fixedly connected to each other through the first connecting ring; and
the plurality of hydrofoils are connected to the marine floating body through the first connecting ring.

In some embodiments, the marine floating body array further comprises an anchoring device;
wherein the anchoring device is connected to the plurality of hydrofoils via three wire ropes provided below the plurality of hydrofoils;
a second connecting ring is provided below the plurality of hydrofoils, and is connected to the plurality of hydrofoils; and
bottom ends of the three wire ropes are connected to the second connecting ring.

In some embodiments, a connecting point is provided at a middle portion of the tailing end of each of the plurality of hydrofoils;
a top end of a first wire rope among the three wire ropes is connected to the first connecting ring at one end of each of the plurality of hydrofoils, a top end of a second wire rope among the three wire ropes is connected to the first connecting ring at the other end of each of the plurality of hydrofoils, and a third wire rope among the three wire ropes is connected to the connecting point; and
the third wire rope among the three wire ropes is adjustable in length to adjust an attack angle of the wave-breaking baffle relative to incoming waves.

In a third aspect, this application provides a wind-wave resisting method, performed by the marine floating body described above, comprising:
deploying the marine floating body on a sea, and arranging a wave-breaking baffle around the marine floating body, wherein air is retained in the air chamber;
when wind and waves on the sea surface intensify to cause the marine floating body to sway to expel the air from the air chamber, filling the air chamber with seawater;
as the air in the air chamber decreases and the amount of seawater on an upper surface of the marine floating body increases, submerging the marine floating body into the sea under the combined action of oscillating waves and a wind pressure; and
when the wind and waves on the sea surface, a frequency of wave oscillation and the wind pressure weaken, forcing the marine floating body to rise under the action of redundant buoyancy; and when the inlet check valve is exposed above the sea surface, forcing external air to enter and fill the air chamber under the action of atmospheric pressure.

In a third aspect, this application provides a wind-wave resisting method, performed by the marine floating body array described above, comprising:
deploying the marine floating body array on a sea, and arranging a wave-breaking baffle around the marine floating body array, wherein air is retained in the air chamber;
when wind and waves on the sea surface intensify to cause the plurality of marine floating bodies to sway to expel the air from the air chamber, filling the air chamber with seawater, wherein seawater is forced to move to an upper surface of the marine floating body array through gaps therein;
as the air in the air chamber decreases and the amount of seawater on the upper surface of the marine floating body array increases, submerging the marine floating body array into the sea under the combined action of oscillating waves and a wind pressure; and
when the wind and waves on the sea surface, a frequency of wave oscillation and the wind pressure weaken, forcing the marine floating body array to rise under the action of redundant buoyancy; and when the inlet check valve is exposed above the sea surface, forcing external air to enter and fill the air chamber under the action of atmospheric pressure.

### BRIEF DESCRIPTION OF THE DRAWINGS

Fig. 1 is a top view of a marine floating body according to an embodiment of the present disclosure;
Fig. 2 is a cross-sectional view of the marine floating body according to an embodiment of the present disclosure;
Fig. 3 schematically shows a connecting structure between two adjacent marine floating bodies in a marine floating body array according to an embodiment of the present disclosure;
Fig. 4 is a top view of the marine floating body array according to an embodiment of the present disclosure;
Fig. 5 is a side view of a hydrofoil according to an embodiment of the present disclosure; and
Fig. 6 is a side view of the hydrofoil, a wire rope provided below the hydrofoil and an anchoring device according to an embodiment of the present disclosure.

In the figures: 1-air chamber; 11-top wall; 12-side wall; 2-inlet check valve; 13-floating board; 3-hydrofoil; 4-connecting ring; 5-connecting structure; 51-stainless-steel sleeve; 52-connecting plate; 6-groove; and 7-connecting point.

### DETAILED DESCRIPTION OF EMBODIMENTS

In order to make the objects, technical solutions and advantages of the present disclosure clearer, the present disclosure will be described clearly and completely below in conjunction with the accompanying drawings and embodiments. Obviously, described herein are merely some embodiments of the present disclosure, rather than all embodiments.

Extensive research has been carried out in the field of offshore photovoltaics, leading to the development and design of photovoltaic equipment, marine floating bodies, and wave-breaking structures capable of operating on the sea surface, for which corresponding patent applications have been filed. Prior equipment is capable of withstanding a certain degree of offshore wind and waves. However, practical application has shown that in some sea areas, higher-level wind and waves may occasionally occur. Although such events are relatively infrequent, they can nevertheless cause damage to the photovoltaic equipment once they occur. In view of these circumstances, further in-depth research on photovoltaic equipment and marine floating bodies has been conducted, resulting in the present application.

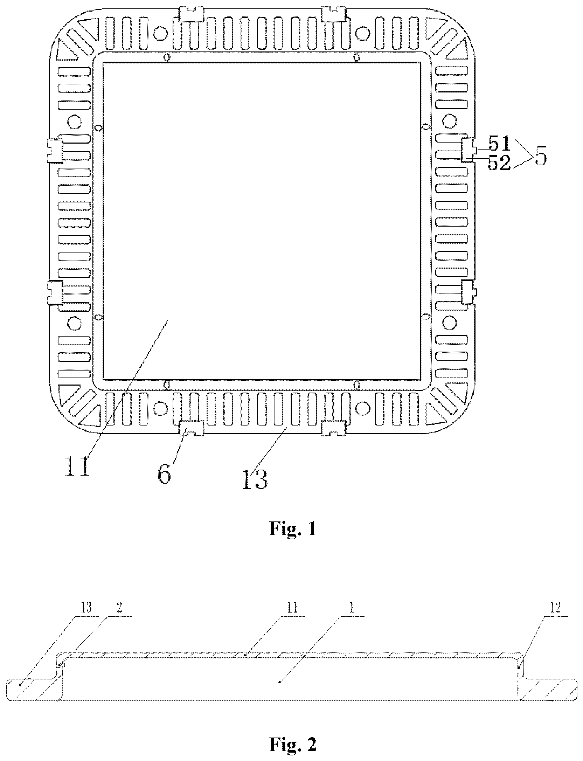

In a first aspect, an embodiment of the present disclosure provides a marine floating body. As shown in Fig. 1, the marine floating body includes an air chamber 1. When the marine floating body is placed on a sea surface, the air chamber 1 is inverted over the sea surface, and a top wall and surrounding side walls of the air chamber 1 are sealed.

A wall structure enclosing the air chamber 1 includes a top wall 11 and a side wall 12. The top wall 11 is fixedly provided with a photovoltaic assembly. The top wall 11 is either sealed or semi-open. When the top wall 11 is semi-open, the photovoltaic assembly is provided to seal the top wall 11, such that a top of the air chamber 1 becomes sealed, thereby preventing the air inside from escaping through the top wall 11.

The side wall 12 is provided with an inlet check valve 2.

The number of the inlet check valve 2 is 2-4, and 2-4 inlet check valves 2 are evenly provided at an upper portion of the side wall 12. In some embodiments, the number of the 2-4 inlet check valves 2 is two.

The inlet check valve 2 is configured for introducing air into the air chamber 1. Since it is a check valve, it allows only air inflow and prevents air from being discharged. A thickness of the inlet check valve 2 is similar to that of a pencil, that is, the inlet check valve 2 having a diameter of about 1 cm. In practical applications, the specific size of the inlet check valve 2 should also be determined by taking into consideration factors such as a size of the marine floating body, a buoyant force of the marine floating body and a volume of the air chamber 1, so as to achieve an optimal effect.

In some embodiments, an outer side of a lower portion of the side wall 12 is provided with a floating board 13. The floating board 13 is integrally formed with the wall structure. The marine floating body is integrally formed, including a central shell enclosing the air chamber 1 and a plurality of floating boards surrounding the shell. The marine floating body is made of a polymer material, for example, but not limited to, polyethylene (PE) and polyurethane (PU). The polymer material mainly provides buoyancy and strength. In addition, a framework of higher strength is arranged within the marine floating body to further enhance its structural strength and improve its resistance to wind and waves.

In some embodiments, a horizontal profile of the marine floating body is rectangular, triangular or hexagonal. In some embodiments, the horizontal profile of the marine floating body is square, and an overall structure of the marine floating body is flat. The air chamber 1 is located directly below a central portion of the marine floating body, i.e., the floating board 13 is uniformly distributed around the side wall 12.

In some embodiments, the marine floating body is configured to offer a redundant buoyancy. When the marine floating body is submerged into a sea, and the air chamber 1 is filled with seawater, a buoyant force acting on the marine floating body is greater than a weight of the marine floating body. The marine floating body described herein includes the photovoltaic assembly. In some embodiments, the magnitude of the redundant buoyancy determines the rising speed of the marine floating body. When the redundant buoyancy is large, the rising speed is fast and the rising occurs earlier; when the redundant buoyancy is small, the rising speed is slow and the rising occurs later.

In some embodiments, the air chamber 1 provided herein forms part of a suction-cup-like structure of the marine floating body. When the photovoltaic assembly is installed horizontally on the marine floating body, a central portion of a lower surface of the marine floating body is configured as the air chamber 1, such that the air in the air chamber 1 is enclosed by the water surface. Under the combined action of the buoyancy of the marine floating body and the atmospheric pressure, the marine floating body adheres to the water surface like a suction cup. When the marine floating body encounters wind and waves of general intensity, for example, when the wave height is below 2 meters, the buoyancy of the marine floating body and the buoyant force provided by the air chamber 1 prevent the marine floating body from sinking into the sea, and the atmospheric pressure maintains overall contact with the water surface, thereby achieving adherence to the sea surface and effectively enhancing resistance to wind and waves. When the wind and wave intensity exceed a predetermined level, for example, when the wave height is above 2 meters and between 2 and 3 meters, the marine floating body oscillates more violently, causing partial separation of the air chamber 1 from the sea surface. The air in the air chamber 1 is gradually expelled and replaced by seawater. Under such severe wind and wave conditions, the air chamber 1 is gradually completely filled with seawater, such that the marine floating body as a whole is gradually submerged into the sea under the action of wind pressure. By providing suitable redundant buoyancy and gaps for seawater to flow upward, the marine floating body can substantially complete its submersion operation before the wave height reaches 3 meters, thereby avoiding threats to the marine floating body from larger waves of 3 meters or more. In some embodiments, a width of the floating board is 100-300 mm. In some embodiments, the width of the floating board is 150-200 mm.

An overall size of the marine floating body in the present disclosure is generally no more than 6 m × 3 m. In some embodiments, the overall size of the marine floating body is 3 m × 1.5 m. When the floating body is square, its size is 2 m × 2 m. That is, in some embodiments, the horizontal profile of the marine floating body has a square cross-sectional shape. When the sizes of the marine floating body in the present disclosure are within the above ranges, the air chamber 1, the wall structure forming the air chamber 1, and the floating board 13 together constitute a floating body structure, which can provide sufficient redundant buoyancy. For example, the floating body structure enables the marine floating body to stably float on a sea surface with wave heights of 2 meters or less.

In an embodiment, a space within the air chamber 1 is cylindrical, conical or cuboid. In some embodiments, the space within the air chamber 1 is cuboid. In some embodiments, a cross-section of the air chamber 1 is square, with a side length of 1.4 -1.6 m.

If the sizes of the air chamber 1 are too large, a buoyant force provided by the marine floating body may be insufficient to support the photovoltaic assembly. If a size of a hollow portion of the marine floating body is too small, the suction provided by the hollow portion is insufficient, resulting in poor adherence of the photovoltaic assembly to the water surface. When the hollow portion of the marine floating body has the above-mentioned sizes, it can provide sufficient suction to enable the marine floating body to adhere to the water surface, while the buoyant force provided by the marine floating body is relatively large. The cooperative action of the air chamber 1 and the marine floating body effectively enhances the wind and wave resistance of the marine floating body.

In an embodiment, an upper surface of the floating board 13 has striped or ripple-shaped textures, as shown in Fig. 1, serving as an anti-slip structure for personnel walking thereon and also functioning as a drainage structure.

An edge cross-section of the marine floating body is arcuate, which can reduce the impact of water flow, prevent damage caused by collisions between marine floating bodies, and facilitate relative opening and closing movement between the marine floating bodies.

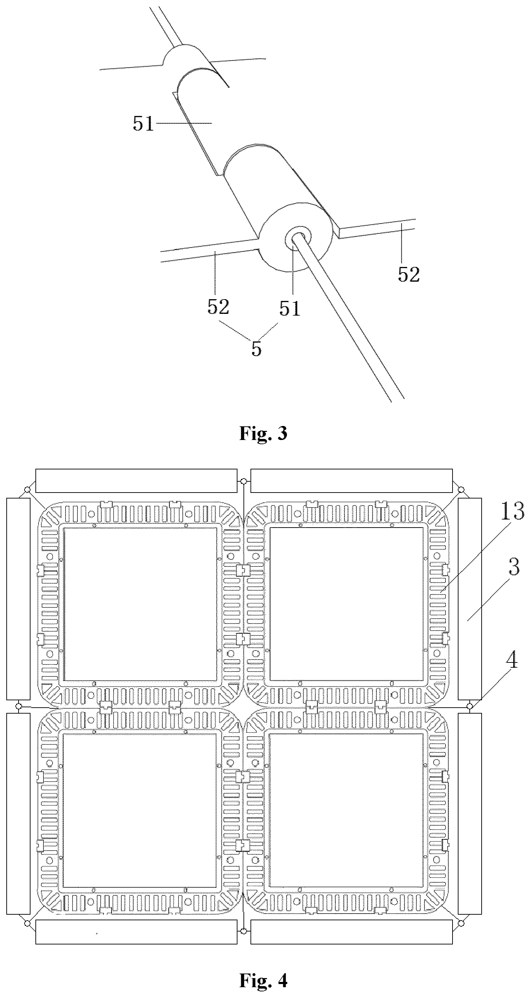

The present disclosure also provides a marine floating body array with a wave-breaking baffle, as shown in Fig. 3. The marine floating body array includes a plurality of marine floating bodies, each being the marine floating body described above.

In some embodiments, transversely adjacent marine floating bodies are connected to each other, and longitudinally adjacent marine floating bodies are connected to each other, such that the marine floating body array is integrally formed. The overall structure of the connected marine floating body array is square, meaning that the number of marine floating bodies in the horizontal and vertical directions is the same.

The plurality of marine floating bodies are detachably connected. In some embodiments, the plurality of marine floating bodies are connected by a snap-fit connection, a sleeve connection or a combination thereof. In some embodiments, the plurality of marine floating bodies are connected by the sleeve connection.

In the present disclosure, the marine floating bodies are not directly fixed to each other. Adjacent marine floating bodies are connected via a wire rope. The marine floating bodies are sleeved onto the wire rope through a connecting structure 5 located around the floating board 13, thereby connecting the marine floating bodies to form the marine floating body array. Adjacent marine floating bodies are configured to rotate along a vertical direction of the wire rope.

This connection manner allows the marine floating bodies and photovoltaic assemblies to rotate within a certain range around the wire rope when impacted by water flow, thereby reducing damage to the marine floating bodies, the photovoltaic assemblies, and their connecting portions caused by water flow impact.

In an embodiment, a peripheral portion of the floating board 13 of the marine floating body is provided with a plurality of grooves 6. Each groove 6 is provided with the connecting structure 5. The connecting structure 5 is sleeved onto the wire rope for mutual connection between the marine floating bodies. The connecting structure 5 is integrally connected with the floating board 13 of the marine floating body, as shown in Fig. 1.

The integral connection allows the connecting structure 5 to bear forces more effectively, preventing breakage of the connecting structure 5 and improving the tolerance and wave resistance of the marine floating bodies.

In some embodiments, the number of grooves 6 on each edge of the floating board 13 is 1-10. In some embodiments, the number of grooves 6 on each edge of the floating board 13 is 2-5.

A distance between adjacent grooves 6 on the floating board 13 are equal. The distance between adjacent grooves 6 is 400-700 mm. In some embodiments, the distance between adjacent grooves 6 is 500-600 mm. In some embodiments, the distance between adjacent grooves 6 is 550 mm.

In an embodiment, the connecting structure 5 includes a stainless-steel sleeve 51 and a connecting plate 52. A first side of the connecting plate 52 is connected to the floating board 13, and a second side of the connecting plate 52 is connected to the stainless-steel sleeve 51. A photovoltaic carrier is sleeved onto the wire rope through the stainless-steel sleeve 51, as shown in Fig. 3.

Installing via the stainless-steel sleeve can prevent wear of the connecting structure caused by the wire rope, thereby extending its service life.

In some embodiments, each connecting structure 5 includes one or two stainless-steel sleeves 51. When including two stainless-steel sleeves 51, the two stainless-steel sleeves 51 are located at two ends of the connecting plate 52, and the connecting structure 5 has a concave shape. When including one stainless-steel sleeve 51, the stainless-steel sleeve 51 is located at a middle of the connecting plate 52, and the connecting structure 5 has a convex shape. The convex-shaped connecting structure can be nested into the concave-shaped connecting structure, as shown in Figs. 1 and 3.

More preferably, any two adjacent sides of the floating board 13 are provided with concave-shaped connecting structures, while the other two sides of the floating board 13 are provided with convex-shaped connecting structures. This arrangement ensures that the concave-shaped connecting structures and convex-shaped connecting structures of adjacent floating boards 13 are engaged, forming a hinge-like structure when sleeved onto the wire ropes, as shown in Fig. 3. When encountering wind and waves, the marine floating bodies can rotate along the vertical direction of the wire rope. At the same time, the engaged arrangement prevents relative displacement between adjacent marine floating bodies along an axial direction of the wire rope during wave-induced swinging.

By adopting the above connection manner, the marine floating body array can rotate within a certain range along the vertical direction of the wire rope when subjected to water flow impact, thereby reducing damage to the marine floating body array and its connecting components caused by water flow impact.

In an embodiment, as shown in Fig. 4, the wave-breaking baffle is arranged around the marine floating body array.

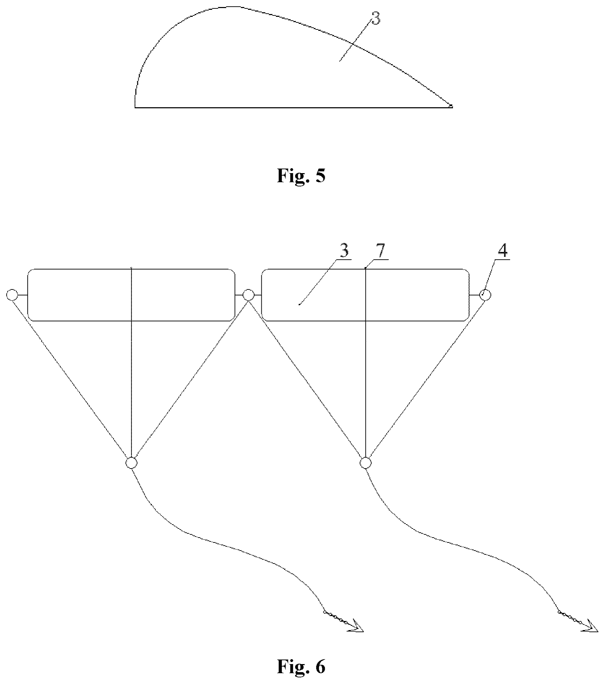

The wave-breaking baffle includes a plurality of hydrofoils 3 connected in sequence. Each hydrofoil 3 has an airfoil-shaped cross section. As shown in Fig. 5, a first end of a longitudinal section of each hydrofoil 3 has a first curvature, and a second end of a longitudinal section of each hydrofoil 3 has a second curvature. The first curvature is larger than the second curvature. The first end is configured as a leading end, and the second end is configured as a tailing end. The leading end is oriented toward an exterior of the marine floating body array, and the tailing end is oriented toward an interior of the marine floating body array.

In some embodiments, a lower surface of each hydrofoil 3 is planar. An upper surface of each hydrofoil 3 is streamlined. For each hydrofoil 3, the lower surface is connected to the upper surface.

In the present disclosure, a shape of the hydrofoil 3 is similar to an airplane wing. The hydrofoil 3 is configured to provide a certain amount of buoyancy and mainly functions as a flow guide. According to the principle of Bernoulli's theorem, which applies to airplane lift, a lower surface of the wing is relatively flat while an upper surface of the wing is curved. Air flowing along the wing's upper surface moves faster than along the lower surface, resulting in a lower pressure on the upper surface than on the lower surface, which generates an upward lift that enables the airplane to take off. Similarly, both air and water are fluids. When waves impact the hydrofoil, the pressure on the lower surface of the hydrofoil is greater than the pressure on the upper surface, generating an upward lift that causes the hydrofoil to rise. Anchors are arranged below the hydrofoils to firmly fix the wave-breaking baffle to the seabed. The energy of the waves is transmitted to the seabed, and the strong downward force counteracts the upward lift of the hydrofoils, thereby producing a wave-breaking effect.

In some embodiments, an aspect ratio of each hydrofoil 3 is 5-8:4. In some embodiments, the aspect ratio of each hydrofoil 3 is 6:4. Each hydrofoil 3 has a length of 1-8 m. Each hydrofoil 3 has a length of 2-3 m. The length of each hydrofoil 3 corresponds to a side length of the marine floating body with floating board 3.

A width of each hydrofoil 3 is selected based on the hydrological conditions of the sea area where the marine floating body array is deployed. In some embodiments, the width of each hydrofoil 3 is 0.75-1.5 m. The hydrofoils 3 are made of PE, PU or resin.

In an embodiment, a middle portion of each of left and right ends of each hydrofoil 3 is provided with a first connecting ring 4. The Left and right ends of each hydrofoil 3 correspond to the first and second ends of each hydrofoil 3. The first connecting ring 4 is circular in shape. Two adjacent hydrofoils 3 are fixedly connected to each other through the first connecting ring 4. In the present disclosure, in a horizontal direction, for each hydrofoil 3, an end of the hydrofoil 3 adjacent to the marine floating body array is defined as the leading end, i.e., a front end; an end of the hydrofoil 3 away from the marine floating body array is defined as the tailing end, i.e., a rear end; and two sides of the hydrofoil 3 are defined as the left and right ends.

The plurality of hydrofoils 3 are connected to the marine floating body through the first connecting ring 4. The connection through the first connecting ring 4 allows adjacent hydrofoils 3 and the marine floating body to swing slightly relative to each other, so as to facilitate smooth release of air in the air chamber 1 under rough sea conditions.

In some embodiments, left and right ends of each hydrofoil 3 are each provided with the first connecting ring 4 to connect the marine floating body with the hydrofoils 3. The first connecting ring 4 enables balanced distribution of tensile forces among the wire ropes and among the hydrofoils 3, thereby alleviating metal fatigue and wear of the overall photovoltaic array caused by long-term swinging under wind and wave conditions, increasing the degree of flexibility, prolonging the service life of the overall photovoltaic array, and reducing maintenance and replacement costs. The wire ropes are connected with the first connecting ring 4, and metal ferrules are crimped by hydraulic pliers to achieve secure fixation. Similarly, at the positions where the wire ropes are connected to the first connecting ring 4, metal ferrules are also crimped by hydraulic pliers, ensuring firm fastening and preventing detachment.

In some embodiments, the marine floating body array further includes an anchoring device. The anchoring device includes an anchor rope, an anchor chain and an anchor.

The anchoring device is connected to the hydrofoils 3 through three wire ropes provided below the hydrofoils 3. In some embodiments, as shown in Fig. 6, a second connecting ring is provided below the hydrofoils 3, and is connected to the plurality of hydrofoils. Bottom ends of the three wire ropes are connected to the second connecting ring.

A connecting point 7 is provided at a middle portion of the tailing end of each hydrofoil 3. A top end of a first wire rope among the three wire ropes is connected to the first connecting ring 4 at the left end of each of the plurality of hydrofoils 3, a top end of a second wire rope among the three wire ropes is connected to the second connecting ring 4 at the right end of each of the plurality of hydrofoils 3, and a third wire rope among the three wire ropes is connected to the connecting point 7. The three wire ropes form a triangular pyramid-shaped linear structure, similar to the triangular line structure of a kite. The above triangular fixing arrangement, inspired by the triangular fixation of kites, serves as a triangular stabilizing device.

In some embodiments, the third wire rope among the three wire ropes is adjustable in length to adjust an attack angle of the wave-breaking baffle relative to incoming waves. When the third wire rope is longer, the attack angle of the wave-breaking baffle against the waves is smaller; conversely, when the wire rope is shorter, the attack angle is larger.

In the present disclosure, the attack angle of the wave-breaking baffle is determined based on the hydrological conditions of the local waters and the wave intensity where the marine floating body is deployed. Generally, in waters with large waves, the attack angle is set smaller, for example, 25-30°; in waters with smaller waves, the attack angle is set larger, for example, 30-35°. Such a configuration better stabilizes the photovoltaic array and adapts it to the hydrological conditions of the deployment site. In this embodiment, the attack angle of the wave-breaking baffle is set to 30°.

The two wire ropes provided at two ends of the hydrofoil are configured to transmit the tension force generated between the marine floating body array and the wave-breaking baffle to the seabed through the anchor rope, the anchor chain and the anchor of the anchoring device. When particularly large waves occur or under extreme weather conditions, the wave-breaking baffle functions as a front-end portion of the marine floating body array, causing the marine floating body array to submerge into the sea and, after the waves subside, allowing the marine floating body array to resurface. The water flow beneath the hydrofoils has a lower velocity than the water flow above. Due to the hydrofoil profile, the ocean currents are guided downward beneath the marine floating body array, thereby reducing or eliminating resonance. This configuration achieves wave-dissipation and anti-collision effects, and further causes the marine floating body array to submerge underwater.

The present disclosure also provides a wind-wave resisting method, performed by the marine floating body described above, including the following steps.

The marine floating body is deployed on a sea, and a wave-breaking baffle is arranged around the marine floating body, where air is retained in the air chamber 1. The marine floating body is laid substantially horizontally on a sea surface, such that even if a portion of seawater enters the air chamber 1, the seawater is gradually expelled below the sea surface under the action of atmospheric pressure.

When wind and waves on the sea surface intensify to cause the marine floating body to sway to expel the air from the air chamber 1, the air chamber 1 is filled with the seawater.

As the air in the air chamber 1 decreases and the amount of seawater on an upper surface of the marine floating body increases, the marine floating body is submerged into the sea under the combined action of oscillating waves and a wind pressure. At this time, the waves are caused to oscillate violently in a vertical direction and to continuously impact the marine floating body, whereby a downward force is applied to the marine floating body. In combination with the wind pressure and a weight of the seawater, the marine floating body is subjected to a continuous vertical downward force, such that a downward acceleration and velocity are obtained, causing the marine floating body to be completely submerged into the sea. Owing to the continuous vertical oscillation of the waves, the marine floating body is further subjected to repeated vertical forces, resulting in reciprocating movement in the vertical direction. Through the redundant buoyancy, the marine floating body is maintained substantially at a shallow position below the sea surface, whereby self-protection is achieved without excessive submersion.

When the wind and waves on the sea surface, a frequency of wave oscillation and the wind pressure weaken, the marine floating body is forced to rise under the action of redundant buoyancy. At this time, the frequency of wave oscillation is weakened, and the downward vertical forces applied to the marine floating body during each wave oscillation are weakened and become smaller than the redundant buoyancy. When the inlet check valve 2 is exposed above the sea surface, external air is forced to enter and fill the air chamber 1 under the action of atmospheric pressure. The filling of the air chamber, together with the redundant buoyancy of the marine floating body, enhances the stability and overall impact resistance of the marine floating body, thereby protecting the photovoltaic assembly from damage.

The present disclosure also provides a wind-wave resisting method, performed by the marine floating body array described above, including the following steps.

The marine floating body array is deployed on a sea, and a wave-breaking baffle is arranged around the marine floating body array, where air is retained in the air chamber 1. Each marine floating body is laid substantially horizontally on a sea surface, such that even if a portion of seawater enters the air chamber 1, the seawater is gradually expelled below the sea surface under the action of atmospheric pressure.

When wind and waves on the sea surface intensify to cause the plurality of marine floating bodies to sway to expel the air from the air chamber 1, the air chamber 1 is filled with seawater, where seawater is forced to move to an upper surface of the marine floating body array through gaps therein. The gaps are located between adjacent marine floating bodies, and include gaps provided on the floating board 13.

As the air in the air chamber 1 decreases and the amount of seawater on the upper surface of the marine floating body array increases, the marine floating body array is submerged into the sea under the combined action of oscillating waves and a wind pressure. At this time, the waves are caused to oscillate violently in a vertical direction and to continuously impact the marine floating body array, whereby a downward force is applied to the marine floating body array. In combination with the wind pressure and the weight of the seawater, the marine floating body array is subjected to the continuous vertical downward force, such that downward acceleration and velocity are obtained, causing the marine floating body array to be completely submerged into the sea. Owing to the continuous vertical oscillation of the waves, the marine floating body array is further subjected to repeated vertical forces, resulting in reciprocating movement in the vertical direction. Through the redundant buoyancy, the marine floating body array is maintained substantially at a shallow position below the sea surface, whereby self-protection is achieved without excessive submersion. When the wind and waves on the sea surface, a frequency of wave oscillation and the wind pressure weaken, the marine floating body array is forced to rise under the action of redundant buoyancy. At this time, the frequency of wave oscillation is weakened, and the downward vertical forces applied to the marine floating body array during each wave oscillation are weakened and become smaller than the redundant buoyancy. When the inlet check valve 2 is exposed above the sea surface, external air is forced to enter and fill the air chamber 1 under the action of atmospheric pressure. The filling of the air chamber, together with the redundant buoyancy of each of the marine floating bodies, enhances the stability and overall impact resistance of the marine floating body array, thereby protecting the photovoltaic assembly from damage.

Compared to the prior art, the present disclosure has the following beneficial effects.
(1) The marine floating body provided herein includes the air chamber, and under the combined action of the buoyancy of the marine floating body and the atmospheric pressure, an integral suction-cup-like structure is formed, such that the marine floating body adheres to the water surface similar to a suction cup. The marine floating body further is configured to offer a redundant buoyancy, such that when the photovoltaic assembly and the marine floating body are subjected to relatively weak wind and waves, the redundant buoyancy prevents the marine floating body from sinking into the sea, and the action of atmospheric pressure prevents the marine floating body from detaching from the water surface. Accordingly, the marine floating body maintains adhesion to the water surface, thereby enhancing its ability to resist wind and waves.
(2) The air chamber of the marine floating body is provided with the inlet check valve, through which air is gradually allowed to enter the air chamber when seawater enters, thereby ensuring that the air chamber continuously maintains strong suction capability.
(3) The marine floating body is configured to offer a predetermined redundant buoyancy, and the air chamber possesses predetermined stability and wave-resistance performance. When the wind and wave intensity exceed a predetermined level, air in the air chamber can be expelled from the air chamber and replaced with seawater, thereby further reducing the buoyancy of the marine floating body. Under sufficiently high wind pressure, the marine floating body is forced to submerge into the sea, thereby avoiding damage to the marine floating body and the photovoltaic assembly caused by severe wind and waves.
(4) The marine floating body array is provided with the wave-breaking baffle, which functions as the leading element of the array, causing the marine floating body array to move up and down along the sea surface. This increases the submerging speed during avoidance of large waves and also accelerates the resurfacing speed. The wave-breaking baffle further serves to eliminate resonance, thereby providing wave-dissipation and anti-collision effects.
(5) The hydrofoils of the wave-breaking baffle of the marine floating body array are connected to the anchoring device by three wire ropes arranged in a triangular configuration, forming a triangular stabilizing structure to enhance the stability of the hydrofoils. The first connecting ring and the second connecting ring are provided to ensure balanced distribution of tension force among the wire ropes and alleviates metal fatigue and wear of the overall photovoltaic array caused by prolonged oscillation due to wind and waves.

As used herein, orientation or positional relationships indicated by terms "up", "down", "left", "right", "inner", "outer", "front" and "rear" are based on the orientation or positional relationships shown in the accompanying drawings. These terms are solely for the convenience of describing the present disclosure, and are not intended to indicate or imply that the devices or components must have specific orientations or be constructed and operated in specific orientations. Therefore, these terms should not be understood as limitations of the present disclosure.

It should also be noted that, unless otherwise specifically defined, as used herein, terms "arranged", "mounted", "coupled" and "connected" are to be broadly understood. For example, these terms may refer to fixed connections, detachable connections, or integral connections; mechanical connections, electrical connections, direct connections or indirect connections through intermediate media; or communication between two components internally. For those of ordinary skill in the art, the specific meaning of these terms in the present disclosure can be understood based on the particular context.

Described embodiments are merely illustrative, and are not intended to limit the scope of the present disclosure. It should be understood that various modifications, changes and replacements made by those skilled in the art without departing from the spirit of the disclosure shall fall within the scope of the present disclosure defined by the appended claims.

## Claims

1. A marine floating body, comprising:
an air chamber (1);
**characterized in that** a wall structure enclosing the air chamber (1) comprises a top wall (11) and a side wall (12); the top wall (11) is fixedly provided with a photovoltaic assembly; and the side wall (12) is provided with an inlet check valve (2).

2. The marine floating body according to claim 1, **characterized in that** the number of the inlet check valve (2) is 2-4, and 2-4 inlet check valves (2) are evenly provided at an upper portion of the side wall (12); and
preferably, the number of the 2-4 inlet check valves (2) is two.

3. The marine floating body according to claim 1, **characterized in that** an outer side of a lower portion of the side wall (12) is provided with a floating board (13); and the floating board (13) is integrally formed with the wall structure;
the marine floating body is configured to offer a redundant buoyancy; and in response to a case that the marine floating body is submerged into a sea, and the air chamber (1) is filled with seawater, a buoyant force acting on the marine floating body is greater than a weight of the marine floating body; and
a horizontal profile of the marine floating body is rectangular, triangular or hexagonal, preferably square.

4. A marine floating body array with a wave-breaking baffle, comprising:
a plurality of marine floating bodies, each being the marine floating body according to any one of claims 1-3;
**characterized in that** transversely adjacent marine floating bodies are connected to each other, and longitudinally adjacent marine floating bodies are connected to each other, such that the marine floating body array is integrally formed.

5. The marine floating body array according to claim 4, **characterized in that** the wave-breaking baffle is provided around the marine floating body array.

6. The marine floating body array according to claim 5, **characterized in that** the wave-breaking baffle comprises a plurality of hydrofoils (3) connected in sequence;
each of the plurality of hydrofoils (3) has an airfoil-shaped cross section; a first end of a longitudinal section of each of the plurality of hydrofoils (3) has a first curvature, and a second end of the longitudinal section of each of the plurality of hydrofoils (3) has a second curvature, wherein the first curvature is larger than the second curvature;
the first end is configured as a leading end, and the second end is configured as a tailing end;
the leading end is oriented toward an exterior of the marine floating body array, and the tailing end is oriented toward an interior of the marine floating body array; and
a lower surface of each of the plurality of hydrofoils (3) is flat; an upper surface of each of the plurality of hydrofoils (3) is streamlined; and for each of the plurality of hydrofoils (3), the lower surface is connected to the upper surface.

7. The marine floating body array according to claim 6, **characterized in that** a middle portion of each of the first end and the second end of each of the plurality of hydrofoils (3) is provided with a first connecting ring (4); and the first connecting ring (4) is circular in shape;
two adjacent hydrofoils (3) of the plurality of hydrofoils (3) are fixedly connected to each other through the first connecting ring (4); and
the plurality of hydrofoils (3) are connected to the marine floating body through the first connecting ring (4).

8. The marine floating body array according to claim 7, further comprising:
an anchoring device;
wherein the anchoring device is connected to the plurality of hydrofoils (3) via three wire ropes provided below the plurality of hydrofoils (3);
a second connecting ring is provided below the plurality of hydrofoils (3), and is connected to the plurality of hydrofoils (3); and
bottom ends of the three wire ropes are connected to the second connecting ring.

9. The marine floating body array according to claim 8, **characterized in that** a connecting point (7) is provided at a middle portion of the tailing end of each of the plurality of hydrofoils (3);
a top end of a first wire rope among the three wire ropes is connected to the first connecting ring (4) at one end of each of the plurality of hydrofoils (3), a top end of a second wire rope among the three wire ropes is connected to the first connecting ring (4) at the other end of each of the plurality of hydrofoils (3), and a third wire rope among the three wire ropes is connected to the connecting point (7); and the third wire rope among the three wire ropes is adjustable in length to adjust an attack angle of the wave-breaking baffle relative to incoming waves.

10. A wind-wave resisting method, performed by the marine floating body according to any one of claims 1-3 or the marine floating body array according to any one of claims 4-9, and the wind-wave resisting method comprising:
deploying the marine floating body or the marine floating body array on a sea, and arranging a wave-breaking baffle around the marine floating body or the marine floating body array, wherein air is retained in the air chamber (1);
when wind and waves on the sea surface intensify to cause the marine floating body to sway to expel the air from the air chamber (1), filling the air chamber (1) with seawater, wherein seawater is forced to move to an upper surface of the marine floating body array through gaps therein;
as the air in the air chamber (1) decreases and the amount of seawater on an upper surface of the marine floating body array increases, submerging the marine floating body array into the sea under the combined action of oscillating waves and a wind pressure; and
when the wind and waves on the sea surface, a frequency of wave oscillation and the wind pressure weaken, forcing the marine floating body array to rise under the action of redundant buoyancy; and when the inlet check valve (2) is exposed above the sea surface, forcing external air to enter and fill the air chamber (1) under the action of atmospheric pressure.
